# FASCICULE DE BREVET EUROPEEN

(11) **EP 0 428 425 B1**
(45) Date de publication et mention de la délivrance du brevet: **18.11.1993**
(21) Numéro de dépôt: 90402974.1
(22) Date de dépôt: 23.10.1990
(51) Int. Cl.: B60J 10/06

(54) **Dispositif d'étanchéité monté sur une porte à vitre descendante pour véhicule automobile**
Dichtungsvorrichtung für eine Kraftfahrzeugtür mit absenkbarer Schreibe
Sealing joint mounted on a vehicle door provided with a vertically slidable window

(30) Priorité: 10.11.1989 FR 8914769
(43) Date de publication de la demande: 22.05.1991
(73) Titulaire: REGIE NATIONALE DES USINES RENAULT S.A., 92109 Boulogne Billancourt (FR)
(72) Inventeur: Vergilino, Gérard, F-91160 Longjumeau (FR); Cornec, Georges, F-78200 Mantes la Jolie (FR)
(74) Mandataire: Ernst-Schonberg, Michel

(56) Documents cités:
- EP-A- 0 068 367

## Description

L'invention concerne un dispositif d'étanchéité monté sur une porte à vitre descendante pour véhicules automobiles du type comportant deux structures à bande d'étanchéité dont l'une possède une base et deux parois latérales de serrage définissant une rainure pour servir de logement à un bord d'accrochage formé sur un cadre de porte constitué par un caisson utilisant les panneaux extérieur et intérieur de la porte (voir DE-A-2 818 225).

La publication DE-A-2.818.225 décrit un dispositif d'étanchéité dans lequel des lèvres d'étanchéité en saillie sur le corps de la structure à bande viennent s'appliquer sur les faces adjacentes de la feuillure de portière. L'autre structure à bande est dans ce cas encastrée entre les parois d'une gouttière formée sur le cadre de vitre.

Pour rapprocher le plan de la vitre du plan de la carrosserie, la publication EP-A-0 068 367 décrit un guidage selon lequel les bords de la vitre portent des moyens engagés dans les montants parallèles d'une coulisse portée par le cadre de porte.

Le problème non résolu par cette réalisation, réside dans le fait que le cadre de vitre doit être soudé dans le caisson de porte. Cette manière de procéder complique le processus de fabrication de la porte et de la vitre et nécessite un contrôle de positionnement du cadre. Il en résulte que le cadre est lui-même de conception complexe pour assurer la rétention séparée des structures à bandes d'étanchéité.

Conformément à l'invention le problème est résolu dans un dispositif du type divulgué par DE-A-2 818225 par le fait que :
- le bord d'accrochage d'une structure à bande du dispositif d'étanchéité est formé sur un profilé configuré au pourtour de la vitre et relié rigidement au cadre de la porte.
- le plan de la vitre est sensiblement confondu avec le plan du bord d'accrochage.
- les deux structures à bande sont extérieurement jointives et possèdent des armatures dont l'une est intégrée à une paroi de guidage de la vitre sensiblement située dans le plan d'une paroi latérale de serrage du bord d'accrochage de la structure correspondante.

Le dispositif d'étanchéité de la vitre ainsi réalisé assure un centrage de la vitre et un bon amortissement des vibrations de la porte par suite du calfeutrement de l'intervalle entre la feuillure et le bord d'accrochage sur la porte de la structure à bande d'étanchéité.

Un autre avantage du dispositif est la suppression de tout décalage transversal exagéré de la vitre par rapport au plan de la carrosserie et la conservation de l'écoulement laminaire de l'air autour de la carrosserie dont la rupture génère notamment des bruits nuisibles au confort de conduite du véhicule.

Le dispositif permet également de favoriser la réalisation de carrosseries étanches au niveau du bord extérieur de la feuillure de porte et de supprimer la circulation de l'air porteur de salissures au contact de la feuillure susceptible de détériorer l'étanchéité periphérique du caisson de porte en appui sur un profil d'étanchéité, rapporté sur le fond de la feuillure.

Un autre avantage du dispositif réside dans le fait qu'il permet l'agencement d'un guide de vitre localisé sur la bande de la structure d'étanchéité, susceptible de guider la vitre au cours de sa remontée sans sortir de ladite structure.

D'autres caractéristiques et avantages de l'invention apparaîtront à la lecture de la description faite en référence au dessin annexé dans lequel :

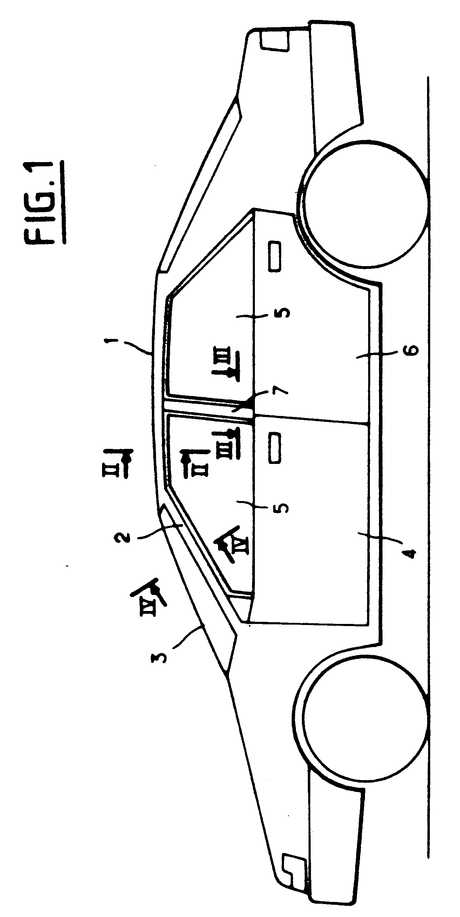

- la figure 1 est une vue en élévation d'une partie de carrosserie de véhicule automobile à deux portes latérales.

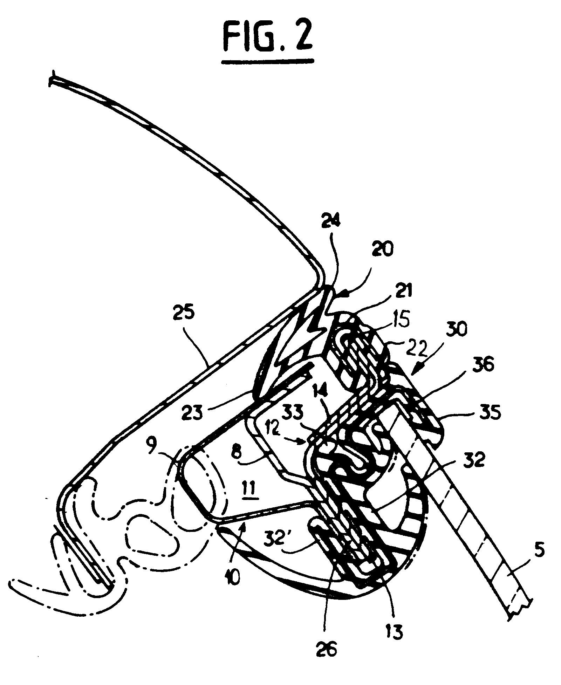

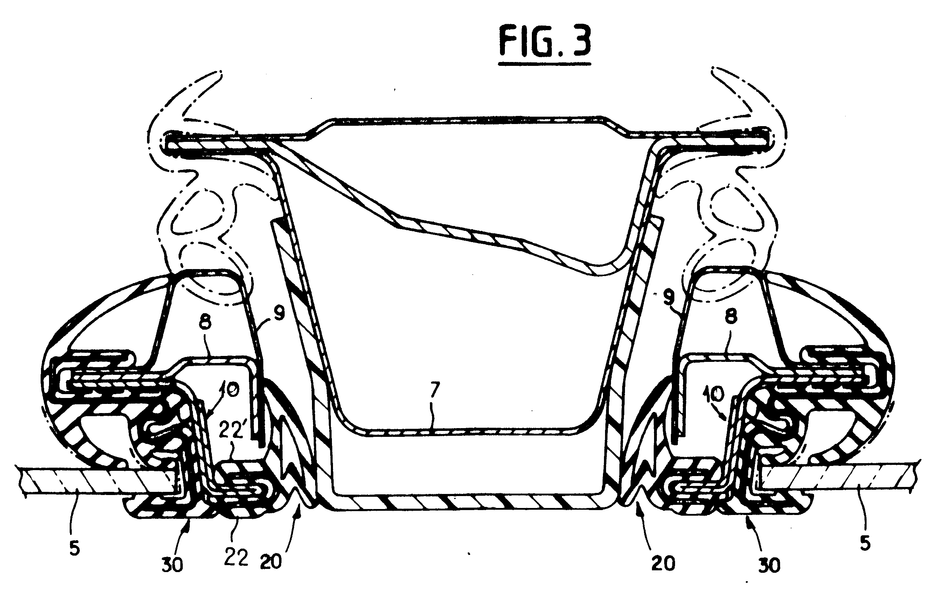

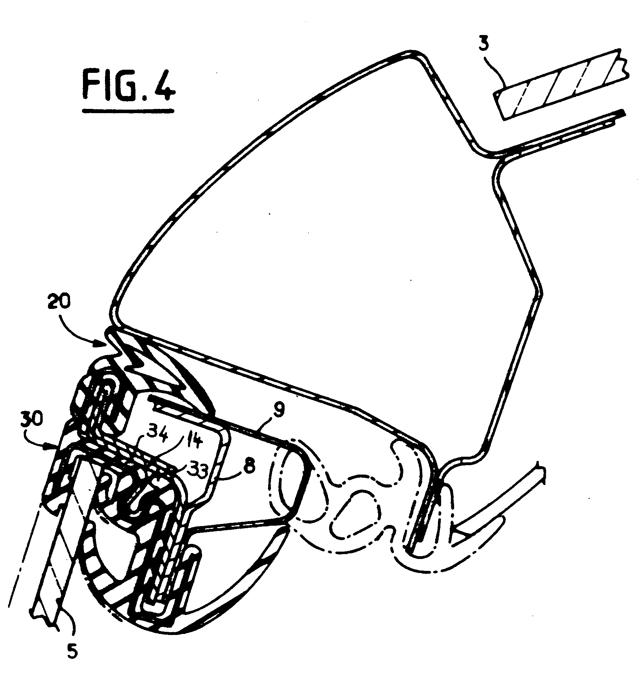

- les figures 2 - 3 - 4 sont des vues en coupe transversale de la carrosserie faites suivant les lignes II-II, III-III, IV-IV de la figure 1.

Selon le dessin, une carrosserie de véhicule automobile est représentée par son pavillon 1 limité latéralement par des montants 2 du pare-brise 3. La carrosserie possède deux ouvertures latérales recevant les portes avant et arrière 4, 6 à vitres descendantes 5 montées dans leurs feuillures respectivement en appui sur un pied médian 7.

Dans ce qui suit on décrira la seule porte avant 4 étant bien entendu que ses caractéristiques sont transposables à la porte 6.

La porte 4 est constituée par un assemblage de panneaux extérieur 8 et intérieur 9 intégrant un élément de cadre 10 pour constituer une structure creuse en caisson 11. Sur l'élément le cadre 10 est rapporté un profilé 12 configuré au pourtour de la vitre 5 et relié rigidement au cadre 10 par tout procédé connnu (soudure, collage, etc...).

Le profilé 12 de section générale en Z possède ainsi un bord de liaison 13 avec le cadre 10, une paroi d'appui et de liaison transversale 14 et un bord d'accrochage 15. Le bord d'accrochage 15 situé sensiblement dans le plan de la vitre 5 est coiffé par une structure 20 à bande d'étanchéité constituée par une base 21 et deux parois 22, 22′ de serrage qui définissent une rainure pour servir de logement au bord d'accrochage 15. La structure 20 porte une lèvre d'étanchéité 23 en appui permanent sur le bord d'assemblage du caisson 11 et un bourrelet de calfeutrement 24 qui vient prendre appui sur la feuillure 25 de la porte dans le but de l'isoler des salissures extérieures et des bruits de circulation d'air lorsque le véhicule est en mouvement.

Une deuxième structure 30 à bande d'étanchéité extérieurement jointives avec la structure 20 est constituée par un profilé en U comportant deux parois de serrage latérales 32, 32' qui définissent une rainure pour servir de logement au bord d'assemblage 26 du caisson 11.

La paroi latérale 32 se prolonge le long du bord de liaison 13 et de la paroi d'appui 14 par des saillies 33, 34 inclinées vers ladite paroi d'appui.

Les structures 20, 30 sont de la sorte séparées par la paroi d'appui 14 selon la direction parallèle au plan de la vitre 5.

La structure 30 possède par ailleurs une branche additionnelle 35 repliée en direction de la surface de la vitre 5, constitutives d'un bord de guidage du bord de la vitre au cours de ses déplacements.

A cet effet, la structure 30 est surmoulée sur une armature en L 36 dont la déformation permet de situer transversalement le bord 35 sensiblement dans le plan de la paroi 22 de serrage du bord d'accrochage 15 et de conférer à la structure 30 la rigidité nécessaire au guidage satisfaisant de la vitre.

## Revendications

1. Dispositif d'étanchéité monté sur une porte à vitre descendante pour véhicules automobiles du type comportant deux structures à bande d'étanchéité (20, 30) dont l'une possède une base (21) et deux parois latérales (22, 22') de serrage définissant une rainure pour servir de logement à un bord d'accrochage (15) formé sur un cadre (10) de porte constitué par un caisson utilisant les panneaux (8, 9) extérieur et intérieur de la porte, caractérisé par le fait que :
- le bord d'accrochage (15) est formé sur un profilé (12) configuré au pourtour de la vitre et relié rigidement au cadre (10) de porte ;
- le plan de la vitre est sensiblement confondu avec le plan du bord d'accrochage (15) ;
- les deux structures à bande (20, 30) sont extérieurement jointives et possèdent des armatures dont l'une est intégrée à un bord (35) de guidage de la vitre sensiblement confondu avec le plan d'une paroi latérale (22) de serrage du bord d'accrochage de la structure correspondante.

2. Dispositif d'étanchéité selon la revendication 1, caractérisé par le fait que les 2 structures à bande (20, 30) sont séparées selon une direction parallèle au plan de la vitre par une paroi d'appui (14) et de liaison transversale du bord d'accrochage (15) avec le cadre de porte (10).

3. Dispositif d'étanchéité selon la revendication 2, caractérisé par le fait que la structure à bande (20) au contact avec la feuillure de porte possède un bourrelet de calfeutrage (24) qui isole la feuillure des salissures extérieures.

## Patentansprüche

1. Dichtungsanordnung, die an einer mit einer versenkbaren Scheibe versehenen Kraftfahrzeugtür angeordnet ist und die zwei Aufbauten mit Abdichtbändern (20, 30) enthält, von denen einer ein Grundteil (21) und zwei Einklemmseitenwände (22, 22') aufweist, die eine Nut zur Aufnahme eines Halterandes (15) bilden, der an einem Türrahmen (10) ausgebildet ist, welcher aus einem Kasten besteht, der innere und äußere Türteile verwendet, dadurch gekennzeichnet, daß:
- der Halterand (15) auf einem Profilteil (12) ausgebildet ist, das an den Scheibenumfang angepaßt ist und das fest mit dem Türrahmen (10) verbunden ist;
- die beiden Aufbauten mit Bändern (20, 30) außen miteinander verbunden sind und Bewehrungen aufweisen, von denen eine mit einem Führungsrand (35) der Scheibe zusammengebaut ist und im wesentlichen mit der Ebene einer Einklemmseitenwand (22) vom Halterand des zugehörigen Aufbaus zusammenfällt.

2. Dichtungsanordnung nach Anspruch 1, dadurch gekennzeichnet, daß die beiden Aufbauten mit Bändern (20, 30) in einer Richtung parallel zur Ebene der Scheibe durch eine Stütz- und quer verlaufende Verbindungswand (14) des Halterandes (15) mit dem Türrahmen (10) getrennt sind.

3. Dichtungsanordnung nach Anspruch 2, dadurch gekennzeichnet, daß der Aufbau mit Band (20) an der Berührungsstelle der Türnut eine Abdichtwulst (24) aufweist, welche die Nut gegen äußere Einflüsse isoliert.

## Claims

1. A sealing joint mounted on a door with a lowerable window for motor vehicles of the type comprising two sealing strip structures (20, 30), one of which comprises a base (21) and two lateral clamping walls (22, 22') defining a groove adapted to act as a housing for a hooking edge (15) formed on a door frame (10) formed by a member using the outer and inner panels (8, 9) of the door, characterized in that:
- the hooking edge (15) is formed on a profiled member (12) configured to match the contour of the window and connected rigidly to the door frame (10);
- the plane of the window is substantially the same as the plane of the hooking edge (15);
- the two strip structures (20, 30) abut externally and have armatures, one of which is integrated with a guiding edge (35) of the window substantially merged with the plane of a lateral clamping wall (22) of the hooking edge of the corresponding structure.

2. A sealing joint as claimed in claim 1, characterized in that the two strip structures (20, 30) are separated in a direction parallel to the plane of the window by a bearing wall (14) for the transverse connection of the hooking edge (15) with the door frame (10).

3. A sealing joint as claimed in claim 2, characterized in that the strip structure (20) in contact with the door rabbet has a packing bead (24) which insulates the rabbet from external soiling.
